Europäisches Patentamt

European Patent Office

Office européen des brevets

(19)

(11) Veröffentlichungsnummer: **0 059 766**
**B1**

(12) # EUROPÄISCHE PATENTSCHRIFT

(45) Veröffentlichungstag der Patentschrift:
11.06.86

(51) Int. Cl.⁴: **C 08 L 95/00, E 04 F 15/12**

(21) Anmeldenummer: 81101562.7

(22) Anmeldetag: 05.03.81

(54) **Gussasphalt-Estrichmasse für den Aufbau von beheizten Fussböden und Fussbodenaufbau mit dieser Gussasphalt-Estrichmasse.**

(43) Veröffentlichungstag der Anmeldung:
15.09.82 Patentblatt 82/37

(45) Bekanntmachung des Hinweises auf die Patenterteilung:
11.06.86 Patentblatt 86/24

(84) Benannte Vertragsstaaten:
AT BE CH FR LI LU NL SE

(56) Entgegenhaltungen:
DE - A - 2 248 603
DE - A - 2 316 241
DE - B - 1 634 046

(73) Patentinhaber: Deutsche Asphalt GmbH,
Neuhausstrasse 1, D-6000 Frankfurt am Main 18 (DE)

(72) Erfinder: Rumiz, Helmut, Ing. grad.,
Beethovenstrasse 21, D-7315 Wellheim (DE)

**0 059 766**

## Beschreibung

Die Erfindung betrifft eine Gußasphalt-Estrichmasse für den Aufbau von solchen Fußböden, in die Trägerrohre für flüssige oder dampfförmige Wärmeträger bzw. Heizmittel mäander- oder schlangenförmig in einer oder mehreren Ebenen eingebettet sind.

Es ist bekannt, bei Fußböden mit eingebauten Rohren für das umgewälzte Heizmedium (Warm- und Heißwasser, Dampf, Heißluft usw.) diese Rohre direkt in Beton oder mineralischen Estrich einzubetten.

Dabei werden wärmetechnisch durchaus zufriedenstellende Ergebnisse erzielt, weil der Wärmeübergang vom Heizrohr zum Beton oder Estrich und von hier zur Fußbodenoberfläche relativ groß ist, so daß selbst bei niedrigen Wärmeträger-Vorlauftemperaturen (HV) von z. B. 35 - 38° C die hygienisch zulässigen Oberflächentemperaturen des Fußbodens erreicht und eingehalten werden können.

Es kommt jedoch bei Verwendung von Metallrohren für das Heizmittel durch Rißbildung im Estrich fast immer zu erheblichen Korrosionen des Rohrmaterials durch Feuchtigkeitseinwirkung in Gegenwart von freiem Sauerstoff (Luft), so daß die zeitliche Belastbarkeit und allgemeine Haltbarkeit von Metallrohr-Beton oder Metallrohr-Estrich Systemen relativ gering ist.

Dieses Problem konnte teilweise behoben werden durch den Einsatz von Kunststoffrohren für das Heizmittel. Bei entsprechendem thermoplastischem Verhalten sind viele Kunststoffe den einschlägigen Metallen als Baustoff für in Beton oder Estrich eingebettete Heizungsrohre überlegen. Dabei spielt auch die hohe Flexibilität, die geringe mechanische Veränderung bei erhöhten Belastungen und damit verbunden die hohe Lebensdauer eine wesentliche Rolle.

Es hat sich aber gezeigt, daß bei Verwendung anorganischmineralischer Estriche (Zementmörtel, Anhydritmörtel, Halbhydratgips usw.) als Einbettmasse für Kunststoffrohre als Heizmittelträger der Wärmebedarf z. B. einer Wohnung nur dann gedeckt werden kann, wenn entweder durch zusätzliche Wärmedämmung (z. B. durch mehrere Wärmedämmschichten) die unteren Lagen des Fußbodenaufbaus vollkommen abisoliert werden oder durch zusätzlich installierte Wandheizungen ein Ausgleich gegenüber dem geringen Wärmeübergang vom Kunststoffrohr zum Estrich und von hier zur Fußbodenoberfläche geschaffen wird.

Besonders nachteilig erweist sich aber bei der direkten Verlegung von Kunststoffrohren in einen anorganischmineralischen Estrich oder Beton das unterschiedliche Ausdehnungsverhalten zwischen (organischem) Kunststoff und (anorganischer) mineralischer Einbettmasse.

Die im laufenden Heizungsbetrieb sehr hohen Biegezug- und Druck-Beanspruchungen dieser unterschiedlichen Materialien, die in Abhängigkeit vom Regelsystem der Heizungsanlage erheblichen Wechselbeanspruchungen mit ständig veränderter Frequenz auftreten, führen einmal zur schnellen Materialermüdung (Verminderung der Festigkeit, Abbau des Polymerisationsgrades des Kunststoffes, mechanische Reibung an den Übergangsflächen usw.) und zum anderen zu einer Veränderung des geforderten gleichmäßigen Wärmeübergangs vom Rohr auf die Einbettmasse und damit auf den Fußboden.

Eine fast ideale Einbettmasse für die Wärmeträgerrohre von Fußbodenheizungen, sowohl für Kunststoff- als auch Metallrohre, wäre ein Gußasphalt-Estrich, da er in Bezug auf Flexibilität und wärmeabhängigem Ausdehnungsverhalten den im allgemeinen für Kunststoff-Heizrohre verwendeten Materialien wie Polyäthylen, Polybuten, Polypropylen, Polyvinylchlorid usw. sehr nahe kommt. Außerdem wird die Festigkeit und Wärmeaustauschwirkung derartiger Rohre durch Gußasphalt-Estrich praktisch nicht beeinflußt. Schließlich unterliegt Gußasphalt-Estrich selbst keinerlei Biegezug- und Druckbeanspruchungen. Von wärmewirtschaftlicher Bedeutung ist aber auch die Tatsache, daß Gußasphalt-Estrich wegen seines wärmedämmenden und isolierenden Verhaltens gerade in Zeiten von Energieverknappung ein idealer Baustoff für Bodenbeläge wäre, der im übrigen auch wegen seines thermoplastischen Verhaltens leicht zu verlegen ist.

Auch Metallrohre könnten in Gußasphalt-Estrich bedenkenlos eingebettet werden, da der Estrich keinerlei korrodierende Wirkung auf das Metall ausübt. Ggf. notwendige Reparaturen am Gußasphalt-Estrich sind schnell und problemlos durchführbar und Änderungen des Fußbodenaufbaus sind leicht zu bewerkstelligen, ganz im Gegenteil zu Beton oder anorganisch-mineralischem Estrich.

Trotz dieser erheblichen Vorteile von Gußasphalt-Estrich gegenüber Beton oder anorganisch-mineralischem Estrich und des Bestehens der bekannten Möglichkeiten, die Eigenschaften von Asphalten durch Zusetzen von Kunststoffen oder Kunstharzen (z. B. D AS 1634046, D OS 2248603 und D OS 2316241) für den jeweils erstrebten Zweck zu verbessern, ist es bisher nicht gelungen, Gußasphalt-Estrich auch im Bereich moderner Fußbodenheizungen erfolgreich einzusetzen.

Ursache hierfür ist das plastische Verhalten von Gußasphalt bei steigender Temperatur und die damit verbundene Änderung der rheologischen Eigenschaften.

Insbesondere bei Bodenheizungssystemen mit relativ hohen Vorlauftemperaturen (HV) des Heizmediums, aber auch schon bei HV-Werten von wenig oberhalb 30° C im Dauerbetrieb, sind bitumenhaltige Estriche (Asphalt-Estrich) trotz ihres sonst idealen Verhaltens bisher kaum zum Einsatz gekommen.

Aufgabe der Erfindung ist es, eine Gußasphalt-Estrichmasse zu schaffen, die in hervorragender Weise zur Herstellung von Fußbodenaufbauten mit eingebetteten Rohren für mit Flüssigkeiten oder Dampf betriebenen Fußbodenheizungen geeignet ist und die alle physikalisch-chemischen sowie material- und wärmetechnischen Unzulänglichkeiten bekannter anorganischer bzw. anorganisch-mineralischer Estriche und Beton überwindet. Dies insbesondere ohne Einbuße der rheologischen Eigenschaften, wie die für die Verlegung erforderliche Viskosität und das thermoplastische Verhalten, selbst bei hohen Heizmittel-Vorlauftemperaturen (HV) im Dauer- und Wechselbetrieb.

2

Die gestellte Aufgabe wird erfindungsgemäß durch einen Gußasphalt-Estrich gelöst, der folgenden Aufbau besitzt:

18,0 bis 42,0 Gew.-% Splitt,
8,0 bis 32,0 Gew.-% Naturbrechsand,
8,0 bis 32,0 Gew.-% gewaschener Natursand,
18,0 bis 36,0 Gew.-% Gesteinsmehl,
6,0 bis 11,0 Gew.-% Bitumen,

wobei das Bitumen mit ca. 1,5 bis ca. 4,5 Gew.-%, bezogen auf das Bitumen, eines organischen Copolymeren aus der Gruppe Äthylen-Vinylester-Copolymerisat und Styrol-Butadien-Copolymerisat modifiziert ist.

Die im Sinne der Erfindung besonders geeigneten organischen Copolymeren sind aus der Äthylen-Vinylester-Copolymerisat-Gruppe solche, deren esterbildende Säure eine 2-3C Alkancarbonsäure ist. Dabei ist es vorteilhaft, ein Copolymerisat aus Äthylen und Vinylacetat zu verwenden, das ein Molverhältnis Äthylen: Vinylacetat von 1: 1 aufweist.

Bevorzugt ist eine Gußasphalt-Estrichmasse folgenden Aufbaus:

ca. 27 Gew.-% Splitt,
ca. 25 Gew.-% Naturbrechsand,
ca. 11 Gew.-% gewaschener Natursand,
ca. 29 Gew.-% Gesteinsmehl,
ca. 8 Gew.-% Bitumen,
ca. 0,18 Gew.-% eines der vorstehend definierten organischen Copolymerisate.

Die Erfindung betrifft auch einen Fußbodenaufbau für Bodenheizungen, der darin besteht, daß auf eine in üblicher Weise hergestellte Betondecke zunächst eine Perliteschicht von ca. 10 mm Stärke, dann eine Wärmedämmschicht (Wärmedämmplatten) von ca. 30 mm Stärke, gefolgt von einer Baustahlmatte und schließlich die erfindungsgemäße Gußasphalt-Estrichmasse von ca. 40 mm Stärke folgt, wobei in letztere die vorwiegend mäanderförmig oder schlangenförmig verlaufenden Heizträgerrohre, ggf. in einer oder mehreren Ebenen, eingebettet sind.

Dabei kann die Gußasphalt-Estrichmasse aus zwei nacheinander hergestellten Schichten von je ca. 20 mm Stärke bestehen, wobei die Heizträgerrohre vorwiegend in die unterste Schicht der Gußasphalt-Estrichmasse eingebettet sind.

Es hat sich gezeigt, daß Gußasphalt-Estrichmassen aus gemäß der Erfindung modifiziertem Bitumen bei Fußbodenheizungen zu uneingeschränkter thermischer Stabilität und Flexibilität führen und dies selbst bei sehr hohen Heizmittel-Vorlauftemperaturen.

Sie verhalten sich völlig indifferent gegenüber Metallrohren. Sie sind schwimmend verlegbar bei unveränderter Viskosität gegenüber nicht modifiziertem Gußasphalt. Die den Metallen verwandte thermische Ausdehnung führt zu einem idealen Nebeneinander von Metallrohr und Estrichmasse, so daß ein Ausgleich im Ausdehnungsverhalten und damit in der Druckbeanspruchung gegeben ist. Reibungsabnutzungen der Metallrohre treten auch bei thermischer und zeitlicher Wechselbeanspruchung des Heizsystems, selbst bei Heizmittel-Vorlauftemperaturen (HV) von 60°C nicht auf, da das plastische Verhalten der erfindungsgemäßen Gußasphalt-Estrichmasse als Schmiermittel wirksam wird.

Die Verarbeitung (Verlegung, Streichung) der neuen Gußasphalt-Estrichmasse für Fußbodenheizungen ist zwischen 160 und 250°C in bekannter Weise möglich. Erst bei Temperaturabfall auf - 35°C tritt Bruch- und Rißbildung ein. Im Dauerversuch wurden zwischen - 30°C und + 60°C praktisch keine Veränderungen der rheologischen Eigenschaften bei Druckbelastung festgestellt.

Aus der DE-A-22 48 603 ist ein bituminöser Straßenbelag bekannt, der aus 60 - 80 Gew.-% Splitt und 10 - 15 Gew.-% Gesteinsmehl besteht und 5,5 - 7,0 % eine Kunststoff-Bitumen-Gemischs enthält. Dieses Kunststoff-Bitumen-Gemisch baut sich auf aus beispielsweise 92,5 % Destillatbitumen und 7,5 % eines nicht näher definierten Äthylen-Copolymerisats mit weiteren Bitumenzusätzen. Aufgabe dieses bekannten Straßenbelags ist die Verbesserung des Belags gegenüber dem Verschleiß durch Spike-Reifen.

Die DE-A-16 34 046 beschreibt eine wasserdurchlässige Deckschicht für Kanalwandungen, die neben üblichem Mischgut ein Additiv in Form eines niedrig polymeren Materials enthält. Als Beispiel dieses Additivs wird Polyisobutylen angegeben.

Die DE-A-23 16 241 nimmt ein bituminöses Belagsmaterial für Böden und Fahrbahnen vorweg, wobei deren Deckmantelschicht u. a. eine Flüssigkeit mit Kunstharz enthält. Als Kunstharz werden genannt: Vinylharz auf der Grundlage von Polyvinylchlorid, Polyvinylacetat, Copolymere aus Vinylchlorid und Vinylacetat sowie aus Vinyl- und Acryl-Gruppen.

In keinem der vorstehend genannten, den Stand der Technik bildenden Dokumente wird eine Gußasphalt-Estrichmasse angesprochen, deren Aufgabe darin besteht, eingebettete Rohre für mit Flüssigkeit oder Dampf betriebene Heizungen aufzunehmen. Entsprechend fehlt auch jeglicher Hinweis auf den erfindungsgemäß vorgeschlagenen Lösungsweg.

Durch die überraschende, aufgrund einschlägiger Erfahrung nicht vorhersehbar gewesene Maßnahme der Erfindung wird ein echtes Vorurteil überwunden, war man doch bisher der Meinung, daß Gußasphalt-Estrichmassen für Fußbodenheizungen nicht geeignet sind.

Die Copolymeren, die sich als Modifizierungsmittel für das am Aufbau der erfindungsgemäßen Gußasphalt-Estrichmasse für beheizte Fußböden beteiligte Bitumen eignen, können innerhalb beliebiger Temperaturbereiche entweder als solche dem Bitumen beigegeben werden (verrührt oder verknetet) oder es

0 059 766

kann die Copolymerisation aus den Monomeren in Anwesenheit des Bitumens erfolgen.

Mischungen z. B. aus Hochvakuumbitumen (85/95) oder (95/105) mit den erfindungsgemäß geeigneten Copolymerisaten im angegebenen Verhältnis (Menge) zeigen bei längerer Beanspruchung noch extrem hohe Standfestigkeiten. In Granulat-, Platten-, Brocken- oder Kornform (gepudert) sind sie beliebig lange lagerfähig.

Sie können bei 160°C - 250°C aufgeschmolzen und thermoplastisch verarbeitet werden.

Es hat sich als zweckmäßig erwiesen, sie zunächst den anorganisch-mineralischen Bestandteilen des Gußasphalt-Estrich trocken und ggf. gepulvert zuzumischen und dann am Ort vor der Verlegung insgesamt aufzuschmelzen.

Die Menge des eingesetzten Copolymerisats richtet sich einmal nach dem Viskositätsverhalten des modifizierten Bitumens und zum anderen nach der Wirksamkeit des Copolymerisats für die Beeinflussung der rheologischen und thermischen Eigenschaften des Bitumens.

Unterhalb von ca. 1,5 Gew.-%, bezogen auf Bitumen, ist der modifizierende Einfluß der Copolymerisate nur noch von untergeordneter Bedeutung. So haben sich in Dauerversuchen Zusätze von 1,2 - 1,3 Gew.-% nicht mehr als brauchbar erwiesen.

Oberhalb von etwa 4,5 Gew.-% nimmt andererseits die Viskosität des Bitumens derart zu, daß bei der Verarbeitung bereits erhebliche Schwierigkeiten auftreten. Insbesondere Styrol-Butadien-Copolymere scheiden wegen ihrer geringen thermischen Plastifizierbarkeit bei diesen Anteilen bereits ganz aus, obwohl sie wegen ihres stabilisierenden Verhaltens auf Bitumen eigentlich das Gegenteil erwarten ließen.

Unter Bezugnahme auf die Tabellen 1 - 3 und die Figuren 1 - 4 wird die Erfindung und die mit ihr erzielbaren Verbesserungen nachstehend näher erläutert.

Es zeigen:

Fig. 1a den Aufbau einer erfindungsgemäßen Versuchs- und Teststrecke mit Gußasphalt-Estrich gemäß der Erfindung in Anlehnung an Anspruch 7 (Prüffeld und Fußbodenaufbau I);

Fig. 1b den Aufbau einer erfindungsgemäßen Versuchs- und Teststrecke in Anlehnung an Anspruch 8 (Prüffeld und Fußbodenaufbau II);

Fig. 2a die graphische Darstellung der Versuchsergebnisse nach Tabelle 1 für den Fußbodenaufbau I gem. Fig. 1a;

Fig. 2b die graphische Darstellung der Versuchsergebnisse nach Tabelle 1 für den Fußbodenaufbau I gem. Fig. 1a, jedoch für eine verlängerte Versuchszeit.

Fig. 3a die graphische Darstellung der Versuchsergebnisse nach Tabelle 2 für den Fußbodenaufbau II gemäß Fig. 1b bei einer Versuchszeit vom Verlegen - 24 Stunden;

Fig. 3b die graphische Darstellung der Versuchsergebnisse nach Tabelle 2 für den Fußbodenaufbau II gemäß Fig. 1b und einer Versuchszeit bis 168 Stunden;

Fig. 4 die graphische Darstellung der Versuchsergebnisse nach Tabelle 3 für den Fußbodenaufbau II gemäß Fig. 1b bei erhöhten Temperaturen und einer Versuchszeit bis ca. 144 Stunden.

Versuchsbedingungen:

1. Aufbau des eingesetzten Gußasphalt-Estrichs

ca. 27 Gew.-% Edelsplitt 2/5

ca. 11 Gew.-% gewaschener Natursand 0/2

ca. 25 Gew.-% Naturbrechsand 0/2

ca. 29 Gew.-% Kalksteinmehl

ca. 8 Gew.-% Hochvakuum-Bitumen 85/95, enthaltend ca. 2,2 Gew.-% eines Äthylen-Vinylacetat-Copolymerisats mit folgenden Eigenschaften: Dichte 0,93 - 0,935 g/cm³;

Shore Härte A = 94; Shore Härte D = 34; Schmelzbereich 91 - 96° C;

Molverhältnis Äthylen: Vinylacetat = 1: 1.

2. Fußbodenaufbau (auch Prüffeld) gemäß Ansprüchen 7 und 8.

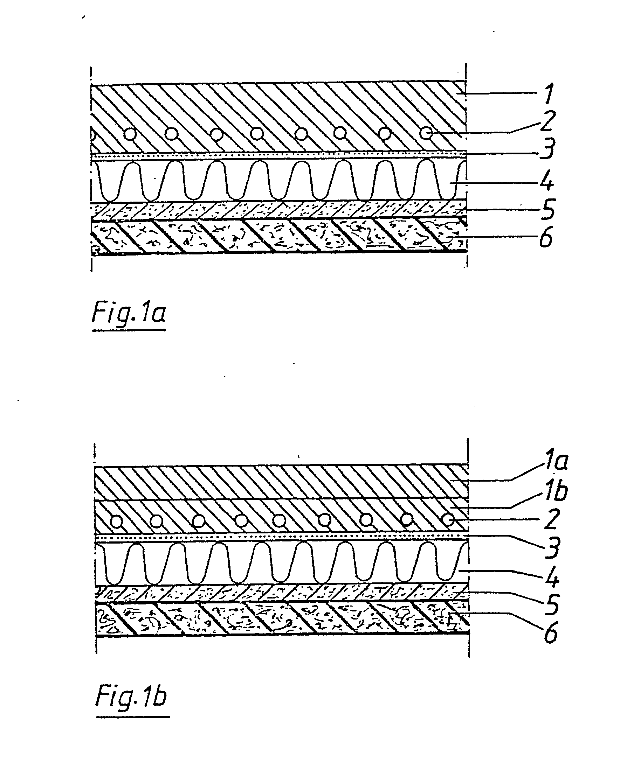

Untersucht wurden zwei Prüffelder (I und II) von je ca. 40 m² Fläche. Der Aufbau ist folgender: (vgl. auch die Fig. 1a für den Fußboden I und 1b für den Fußboden II).

Fußboden (Prüffeld) I.

Auf eine in bekannter Weise angefertigte Betondecke von ca. 20 cm Dicke (6) folgt eine ca. 10 mm starke Perliteschüttung (5), eine ca. 30 mm starke Schicht (4) aus Wärmedämmplatten, eine übliche Baustahlmatte (3) und - abschließendeine ca. 40 mm starke Schicht aus Gußasphalt-Estrich (1) mit der erfindungsgemäßen Zusammensetzung.

Fußboden (Prüffeld) II.

Der Aufbau entspricht demjenigen des Fußbodens I mit Ausnahme der Schicht aus Gußasphalt-Estrich (I), die nacheinander aus zwei Lagen (1a, 1b) von je ca. 20 mm gefertigt wurde.

Die Heizrohre (2) sind in beiden Fällen wenig oberhalb der Baustahlmatte (3) mäanderförmig verlegt. Beim Fußboden II liegen sie auf jeden Fall in der der Baustahlmatte (3) folgenden Gußasphalt-Estrichschicht (1b).

3. Meßverfahren und Meßanordnung

Es wurde die Stempeleindrucktiefe nach DIN 1996, Blatt 13 (1966) in mm gemessen. Die Eindrucktiefe wird in den Tabellen mit "ET" und in den Diagrammen mit "St" angegeben.

Als Vergleichsbasis dient Gußasphalt-Estrich mit Bitumen, das nicht im Sinne der Erfindung durch Copolymere modifiziert ist, sonst aber den gleichen Aufbau wie der erfindungsgemäße Gußasphalt-Estrich besitzt. Auch der Fußbodenaufbau erfolgte bei der Vergleichsbasis gemäß den Prüffeldern (I) und (II).

Der sogenannte ""Standard-Gußasphalt-Estrich", dessen Bitumen also nicht im Sinne der Erfindung

4

modifiziert ist, erfordert nach DIN 18 354 (1979) bei 22° C und einer Belastung von 52,5 kg/cm$^2$ eine Stempeleindringtiefe von nicht mehr als 1,5 mm bzw. zwischen 1,0 und 1,5 mm.

Die vorstehenden Werte sind somit diejenigen Grenzwerte, die von einem für den Aufbau von Fußböden verwendeten Gußasphalt-Estrich, in den Heizrohre eingebettet sind, nicht überschritten werden dürfen.

Vielmehr ist von einem Gußasphalt-Estrich zu verlangen, daß die ermittelten Stempeleindringtiefen auch bei höheren Temperaturen, d. h. oberhalb 22° C, insbesondere bei Heizmittelvorlauftemperaturen (HV) bis 50° C und darüber niedriger liegen als die Standard-Stempeleindringtiefen von max. 1,5 mm (22°C) nach DIN 18 354.

Die erhaltenen Versuchsergebnisse bestätigen die unerwartete Qualitätssteigerung des Gußasphalt-Estrichs durch die Maßnahmen der Erfindung.

Wie aus den Tabellen und in Verbindung mit diesen aus den Diagrammen hervorgeht, verhält sich der erfindungsgemäße Gußasphalt-Estrich auch bei Temperaturen erheblich über 22° C, insbesondere im Bereich von Fußbodentemperaturen zwischen 28 und 35° C, selbst im Dauerbetriebe, gleich oder sogar besser als üblicher, d. h. unmodifizierter Gußasphalt-Estrich bei Temperaturen von 20 - 22° C, die also erheblich niedriger liegen.

Dabei zeigt sich auch, daß mit zunehmender Versuchsdauer die Differenz der Zunahme der Stempeleindringtiefe zurückgeht, so daß eine mit der Zeit eintretende Stabilisierung zu erwarten ist. In jedem Fall nähert sich die Differenz der Eindringtiefen einem Grenzwert, die - wie bekannt - bei üblichen, nicht im Sinne der Erfindung modifizierten Gußasphalt-Estrichen, nicht auftritt.

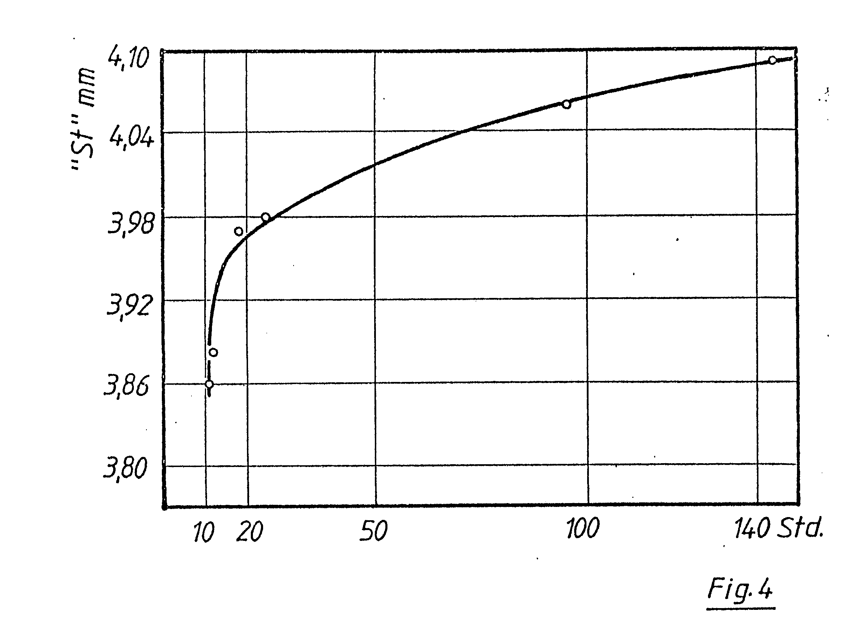

Die gemäß den Tabellen 1 - 3 erhaltenen Werte zeigen weiter, daß der erfindungsgemäß modifizierte Gußasphalt-Estrich bei hoher Temperatur, gemäß Tabelle 3 und Fig. 4 sogar über mehr als 144 Stunden Versuchsdauer und durchschnittlichen Heizmittel-Vorlauftemperaturen (HV) von 58° C (dies entspricht einer durchscnittlichen Fußboden-Oberflächentemperatur von 37-38° C), Eindringtiefen ergibt, die für normalen, d. h. unmodifizierten Gußasphalt-Estrich undenkbar sind.

Dies bedeutet, daß ein gemäß der Erfindung aufgebauter Gußasphalt-Estrich für Fußbodenheizungen, selbst bei den im Dauer betrieb ungewöhnlich hohen Temperaturen bis 38° C, hervorragend geeignet ist und alle erforderlichen thermischen, wärmeleitenden und materialtechnischen (Stabilität) Eigenschaften erfüllt.

Die in den Tabellen und Diagrammen erfaßten Ergebnisse wurden mit einem Gußasphalt-Estrich erhalten, dessen Bitumen (Anteil im Estrich ca. 8,0 Gew.-%) ca. 2,2 Gew.-% eines Äthylen-Vinylacetat-Copolymerisats enthält. Ähnliche Ergebnisse wurden auch mit 3,5 Gew.-% des gleichen Copolymerisats im Bitumen erhalten, während bei unterhalb von ca. 1,5 Gew.-% oder oberhalb von 4,5 Gew.-% erhebliche Streuungen der gemessenen Eindringtiefen auftreten, die eine praktische Verwendung des Estrichs kaum noch ermöglichen.

Es versteht sich, daß die Erfindung, insbesondere was die Auswahl des möglichen Copolymerisats angeht, im Rahmen der dem Fachmann gegebenen Praxis und Wissen nicht begrenzt ist. So sind neben anderen geeigneten Copolymerisaten auch weitere, den Gußasphalt-Estrich verbessernde Zusätze wie Desinfektionsmittel, Konservierungsmittel, Farbpigmente usw. möglich. Auch können die Einzelbestandteile des erfindungsgemäßen Gußasphalt-Estrichs gleiche oder verschiedene Korngrößen aufweisen. Die für den Fußbodenaufbau insgesamt verwendeten Materialien wie Perlite, Beton, Baustahlmatten und Wärmedämmplatten oder -folien entsprechen den üblichen und dem Fachmann bekannten Ausführungsarbeiten und Qualitäten.

Auch die Art der Verlegung der Heizrohre, ob mäander- oder schlangenförmig, als Register oder als Einzelrohre, ob einlagig oder mehrlagig, d. h. in einer oder mehreren Ebenen usw. ist in den Gesamtkomplex der Erfindung, soweit es sich um die erfindungsgemäßen Gußasphalt-Estrichmassen handelt, grundsätzlich eingeschlossen.

Dies betrifft schließlich auch die Reihenfolge des Schichtenaufbaus des erfindungsgemäßen Fußbodens für Bodenheizungen. Dieser Aufbau kann im Rahmen der technischen Möglichkeiten und Kenntnisse eventuell auch eine geringfügig geänderte Reihenfolge aufweisen. So können z. B. eine zweite Schicht von Wärmedämmplatten, eine zusätzliche Perliteschicht oder eine zusätzliche ein- oder mehrlagig gestaltete Gußasphalt-Estrich-Schicht, die ggf. auch unterhalb der Baustahlmatte (3) in Fig. 1a, 1b liegen kann, durchaus vorhanden sein.

**Tabelle 1** (Fußboden bzw. Prüffeld I)

| Zeit in Std. | | HV (°C) | HR (°C) | "ET" mm abs. | "ET" Differenz mm | Temperatur der Fußbodenober- fläche (°C) |
|---|---|---|---|---|---|---|
| nach Verle- gung | | 42 | 38 | — | — | — |
| nach | 2 Std. | 42 | 39 | 0,070 | — | 28,0 |
| " | 3 " | 42 | 39 | 0,085 | + 0,015 | 29,8 |
| " | 4 " | 42 | 39 | 0,090 | + 0,020 | 30,8 |
| " | 5 " | 42 | 39 | 0,100 | + 0,030 | 31,0 |
| " | 24 " | 43 | 41 | 0,210 | + 0,140 | 33,0 |

**Tabelle 1** (Fußboden bzw. Prüffeld I)

| nach | 46 Std. | 44 | 41 | 0,280 | + 0,210 | 34,8 |
|---|---|---|---|---|---|---|
| " | 96 " | 44 | 42 | 0,370 | + 0,300 | 35,3 |
| " | 120 " | 43 | 41 | 0,400 | + 0,330 | 33,5 |
| " | 144 " | 43 | 40,5 | 0,410 | + 0,340 | 33,5 |

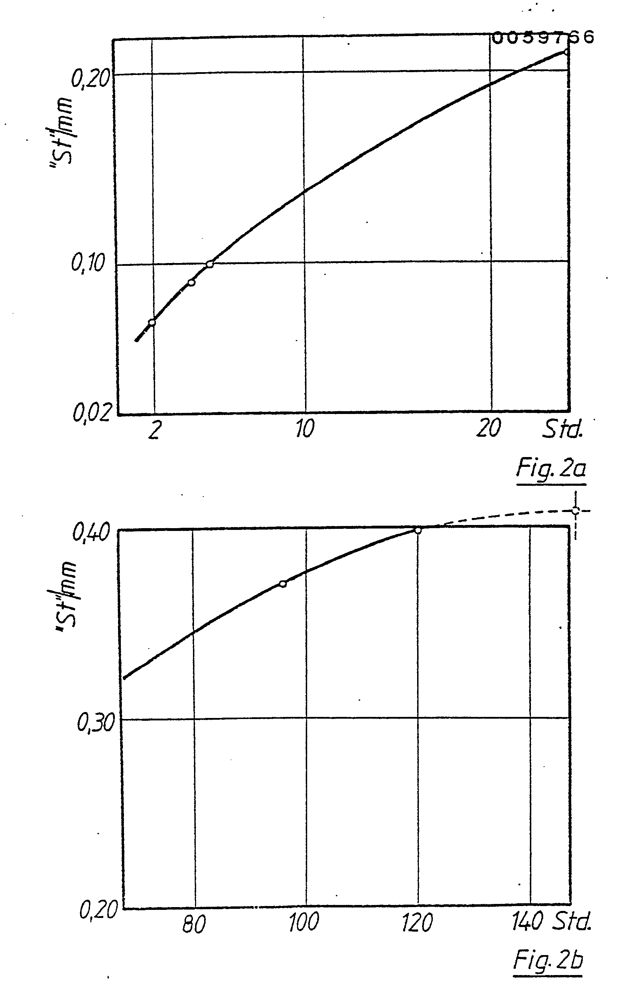

HV = Heißwasser-Vorlauftemperatur
HR = Heißwasser-Rücklauftemperatur
Für die Zeit vom Verlegen bis 24 Stunden siehe Fig. 2a.
Für die Zeit von 46 Stunden bis 144 Stunden siehe Fig. 2b.
Die ""ET" (Eindringtiefe) in mm entspricht der absolut gemessenen Eindringtiefe nach DIN 1996, Blatt 13 (1966)

**Tabelle 2** (Fußboden bzw. Prüffeld II)

| Zeit in Std. | HV | HR | "ET" | | Temperatur der |
|---|---|---|---|---|---|
| | (°C) | (°C) | mm abs. | Differenz mm | Fußbodenober-fläche (°C) |
| nach Verle-gung | 43,0 | 41,0 | 0,27 | — | 28,5 |
| nach 1 Std. | 42,5 | 41,0 | 0,34 | + 0,07 | 30,8 |
| " 3 " | 43,0 | 41,5 | 0,35 | + 0,08 | 31,0 |
| " 5 " | 43,0 | 41,5 | 0,36 | + 0,09 | 30,8 |
| " 24 " | 43,0 | 41,0 | 0,41 | + 0,14 | 31,0 |
| nach 96 Std. | 43,0 | 41,5 | 0,52 | + 0,25 | 35,0 |
| " 120 " | 43,0 | 41,5 | 0,54 | + 0,27 | 35,0 |
| " 144 " | 43,0 | 41,5 | 0,56 | + 0,29 | 35,0 |
| " 168 " | 43,0 | 40,5 | 0,57 | + 0,30 | 34,0 |

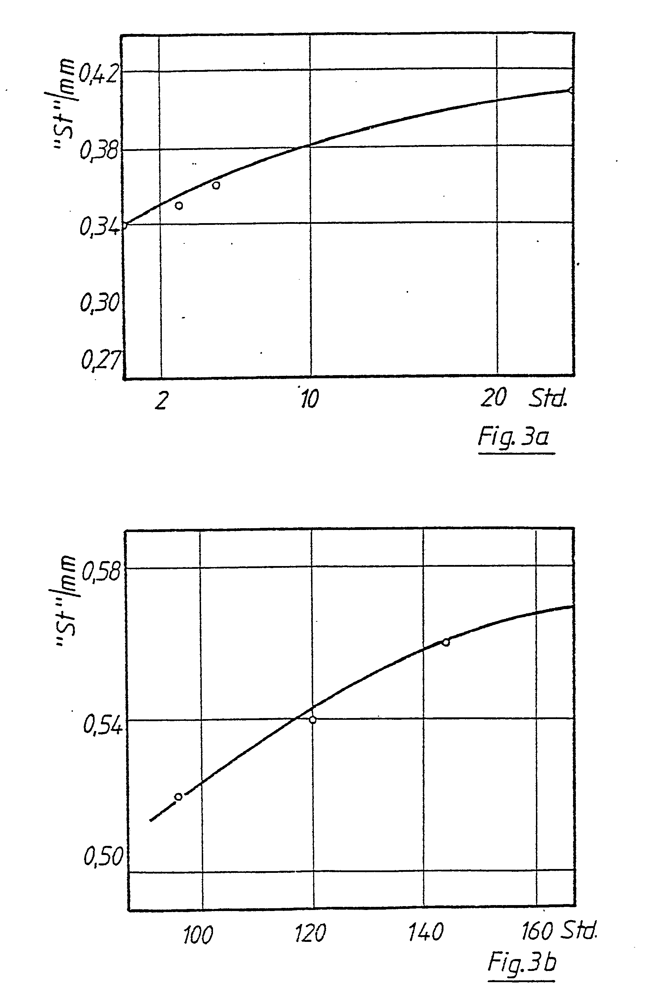

Erläuterungen siehe Tabelle I
Für die Zeit vom Verlegen bis 24 Stunden siehe Fig. 3a Für die Zeit von 96 Stunden bis 168 Stunden siehe Fig. 3b

**Tabelle 3** (Fußboden bzw. Prüffeld II)

Erhöhte Temperaturbelastung

| Zeit in Std. | HV | HR | "ET" | | Temperatur der |
|---|---|---|---|---|---|
| | (°C) | (°C) | mm abs. | Differenz mm | Fußbodenober-fläche (°C) |
| nach Verle-gung | 58,0 | 56,0 | 3,77 | — | 38,0 |
| nach 11 Std. | 58,0 | 56,0 | 3,86 | + 0,09 | 38,0 |
| " 12 " | 58,0 | 57,0 | 3,88 | + 0,11 | 37,5 |
| " 18 " | 58,0 | 52,0 | 3,97 | + 0,20 | 38,2 |
| " 24 " | 58,0 | 56,5 | 3,98 | + 0,21 | 38,0 |
| " 96 " | 54,5 | 54,5 | 4,06 | + 0,29 | 37,5 |
| " 144 " | 58,2 | 55,0 | 4,09 | + 0,32 | 38,2 |

Erläuterungen siehe Tabelle 1
Hierzu Diagramm (Fig.) 4

## Patentansprüche

1. Gußasphalt-Estrichmasse für den Aufbau von solchen Fußböden, die darin eingebettete Rohre für mit Flüssigkeit oder Dampf betriebene Heizungen enthalten, dadurch gekennzeichnet, daß sie
18,0 bis 42,0 Gew.-% Splitt,
8,0 bis 32,0 Gew.-% Naturbrechsand,
8,0 bis 32,0 Gew.-% gewaschenen Natursand,
18,0 bis 36,0 Gew.-% Gesteinsmehl und
6,0 bis 11,0 Gew.-% Bitumen enthält, wobei das Bitumen, mit ca. 1,5 bis ca. 4,5 Gew.-%, bezogen auf das Bitumen, eines organischen Copolymeren aus der Gruppe Äthylen-Vinylester-Copolymerisat und Styrol-Butadien-Copolymerisat modifiziert ist.

2. Gußasphalt-Estrichmasse nach Anspruch 1, dadurch gekennzeichnet, daß die esterbildende Säure des Äthylen-Vinylester-Copolymerisats eine 2-3C Alkancarbonsäure ist.

3. Gußasphalt-Estrichmasse nach Anspruch 2, dadurch gekennzeichnet, daß das Copolymerisat ein Äthylen-Vinylacetat-Copolymerisat mit einem Molverhältnis Äthylen : Vinylacetat von 1: 1 ist.

4. Gußasphalt-Estrichmasse nach Ansprüchen 1 bis 3, gekennzeichnet durch folgenden Aufbau:
ca. 27 Gew.-% Splitt,
ca. 25 Gew.-% Naturbrechsand,
ca. 11 Gew.-% gewaschener Natursand,
ca. 29 Gew.-% Gesteinsmehl, ca. 8 Gew.-% Bitumen und
ca. 0,18 Gew.-% eines organischen Copolymeren aus der Gruppe Äthylen-Vinylester-Copolymerisat oder Styrol-Butadien-Copolymerisat, wobei die Copolymeren als Modifizierungsmittel des Bitumens vorliegen.

5. Verfahren zum Aufbau von beheizten Fußböden mit in die Fußböden eingelegten, als flüssige oder dampfförmige Heizmittel führenden Rohren, dadurch gekennzeichnet, daß zum Einbetten der Heizrohre eine Gußasphalt-Estrichmasse verwendet wird, die der Zusammensetzung nach einem der Ansprüche 1 bis 4 entspricht.

6. Fußbodenaufbau für Bodenheizungen, gekennzeichnet durch eine auf der Betondecke üblicher Ausführung aufliegende Perlitschicht (5) von ca. 10 mm Dicke, nach oben gefolgt von Wärmedämmplatten (4) von ca. 30 mm Dicke, einer üblichen Baustahlmatte (3) und der erfindungsgemäßen Gußasphalt-Estrichmasse (1) von ca. 40 mm Dicke, wobei in letztere die vorwiegend mäanderförmig in einer Ebene verlaufenden Heizträgerrohre (2) eingebettet sind.

7. Fußbodenaufbau nach Anspruch 6, gekennzeichnet durch zwei nacheinander aufgebrachte Schichten (1a, 1b) aus der Gußasphalt-Estrichmasse gemäß Ansprüchen 1 bis 4 von je ca. 20 mm Dicke, wobei die Heizträgerrohre (2) in die unterste Schicht (1b) eingebettet sind.

## Claims

1. Bitumous mastic concrete for the construction of such floors, in which bedded pipes for heating systems operated with liquid or steam, characteristic of which is that they contain
18.0 to 42.0 weight % chippings,
8.0 to 32.0 weight % natural crushed sand,
8.0 to 32.0 weight % washed natural sand,
18.0 to 36.0 weight % ground rock,
6.0 to 11.0 weight % bitumen,
whereby the bitumen with approx. 1.5 to approx. 4.5 weight %, based on the bitumen, is an organic copolymer foam, the ethylene vinyl ester copolymerisate group and modified styrol butadiene copolymerisate.

2. Bituminous mastic concrete according to Claim 1, characteristic of which is that the ester forming acid of the ethylene vinyl ester copolymerisate is a 2-3c alkane carbonic acid.

3. Bituminous mastic concrete according to Claim 2, characteristic of which is that the copolymerisate is a ethylene vinyl acetate copolymerisate with a mol ratio ethylene: vinyl acetate of 1: 1.

4. Bituminous mastic concrete according to Claims 1 to 3, characteristic of which is the following composition: approx. 27 weight % chippings,
approx. 25 weight % natural crushed sand,
approx. 11 weight % washed natural sand,
approx. 29 weight % ground rock,
approx. 8 weight % bitumen and
approx. 0.18 weight % of an organic copolymer from the ethylene vinyl ester copolymerisate group or styrol butadiene copolymerisate, whereby the copolymers serve as modification agent for the bitumen.

5. Process to construct heated floors with pipes laid in the floor as liquid or steam conducting pipes, characteristic of which is that a bituminous mastic concrete the composition of which corresponds to one of Claims 1 to 4 is used to embed the pipes.

6. Floor construction for floor heating systems, characteristic of which is a perlite layer (5) approx. 10 mm thick, of usual execution on the covering concrete, followed upwards by heat insulating panels (4) approx. 30 mm thick, the usual steel fabric mat (3) and the bituminous mastic concrete (I) approx. 40 mm thick, in accordance with the invention, whereby the heat conducting pipes (2) running on one level are embedded primarily in meander form.

7. Floor construction to Claim 6, characteristic of which are the two successively applied layers (1a, 1b) in bituminous mastic concrete according to Claims 1 to 4, each approx. 20 mm thick, whereby the heat conducting pipes (2) are embedded in the undermost layer (16).

## Revendications

1. Pâte de chape à base d'asphalte mastic pour la construction de planchers ou sols dans lesquels sont noyés des tubes pour des systèmes de chauffage fonctionnant au liquide ou à la vapeur, cette pâte étant caractérisée par le fait qu'elle renferme 18,0 à 42,0 % en poids de gravillons

8,0 à 32,0 % en poids de sable concassé naturel,

8,0 à 32,0 % en poids de sable naturel lavé,

18,0 à 36,0 % en poids de farine de roche et

6,0 à 11,0 % en poids de bitume,

le bitume d'environ 1,5 à environ 4,5 % en poids rapporté au bitume d'un copolymère anorganique du groupe des copolymères d'éthylène et l'ester de vinyle et et des copolymères à base de styrène et de butadiène étant modifié.

2. Pâte de chape d'asphalte mastic selon la revendication 1, caractérisée par le fait que l'acide formant l'ester du copolymere d'ethylène et d'ester de vinyle est un acide à base de carbone-alkan 2-3C.

3. Pâte de chape d'asphalte mastic selon la revendication 2, caractérisée par le fait que le copolymère est un copolymere d'éthylène et d'acétate de vinyle présentant un rapport de mole pour l'éthylène et l'acétate de vinyle de 1 : 1.

4. Pâte de chape d'asphalte mastic répondant aux revendications 1 à 3, caractérisée par la structure mentionnée dans ce qui suit:

environ 27 % en poids de gravillons,

environ 25 % en poids de sable de concassage naturel.

environ 11 % en poids de sable naturel lave,

environ 29 % en poids de farine de roche,

environ 8 % en poids de bitume et

environ 0,18 % en poids d'un copolymère organique du groupe des copolymères à base d'éthylène et d' ester de vinyle oundes copolymères à base de styrène et de butadiène, les copolymères se présentant sous forme de produits de modification du bitume.

5. Méthode de construction de planchers ou sols chauffés avec tubes caloporteurs pour liquides ou vapeurs caloporteurs posés dans le plancher ou sol, cette méthode étant caractérisée par le fait que l'on utilise, pour l'encastrement des tubes de chauffage, une pâte de chape à base d'asphalte mastic dont la composition répond à l'une des revendications 1 à 4.

6. Structure du plancher ou sol pour systèmes de chauffage noyés dans le plancher, caractérisée par une couche de perlite (5) d'environ 10 mm d'épaisseur suivie vers le haut de panneaux ou dalles de calorifugeage (4) d'environ 30 mm d'épaisseur, d'un treillis en acier de construction habituel (3) et de la pâte de chape à base d'asphalte coulé (1) d'environ 40 mm d'épaisseur, les tubes caloporteurs (2) disposés essentiellement en forme de meandres étant posés en un seul et même plan dans cette dernière.

7. Structure du plancher ou sol selon la revendication 6, caractérisée par deux couches coulées successivement (1a, 1b) en pâte de chape d'asphalte mastic répondant aux revendications 1 à 4 d'environ 20 mm chacune, les tubes à fluide caloporteur (2) étant noyés dans la couche inférieure (1b).

8

_Fig.1a_

_Fig.1b_

Fig. 2a

Fig. 2b

Fig. 3a

Fig. 3b

Fig. 4